(19) Europäisches Patentamt
European Patent Office
Office européen des brevets

(11) **EP 4 425 510 A1**

(12) **EUROPEAN PATENT APPLICATION**
published in accordance with Art. 153(4) EPC

(43) Date of publication:
**04.09.2024 Bulletin 2024/36**

(21) Application number: **22886411.2**

(22) Date of filing: **03.08.2022**

(51) International Patent Classification (IPC):
*H01B 1/06* (2006.01)  *C01F 17/36* (2020.01)
*H01M 4/13* (2010.01)  *H01M 4/62* (2006.01)
*H01M 10/052* (2010.01)  *H01M 10/0562* (2010.01)

(52) Cooperative Patent Classification (CPC):
**C01F 17/36; H01B 1/06; H01M 4/13; H01M 4/62;**
**H01M 10/052; H01M 10/0562;** Y02E 60/10

(86) International application number:
**PCT/JP2022/029804**

(87) International publication number:
**WO 2023/074076 (04.05.2023 Gazette 2023/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.10.2021 JP 2021174668**

(71) Applicant: **Panasonic Intellectual Property**
**Management Co., Ltd.**
**Osaka-shi, Osaka 540-6207 (JP)**

(72) Inventors:
• **MIYATAKE, Kazufumi**
**Kadoma-shi, Osaka 571-0057 (JP)**
• **MIZUNO, Keita**
**Kadoma-shi, Osaka 571-0057 (JP)**
• **KUBO, Takashi**
**Kadoma-shi, Osaka 571-0057 (JP)**
• **MIYAZAKI, Akinobu**
**Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **SOLID ELECTROLYTIC MATERIAL, BATTERY USING SAME, AND METHOD FOR PRODUCING SOLID ELECTROLYTIC MATERIAL**

(57) The solid electrolyte material of the present disclosure is a solid electrolyte material including Li, Y, and I, wherein in an X-ray diffraction pattern of the solid electrolyte material obtained by X-ray diffraction measurement using Cu-K$\alpha$ rays, the peak having the highest intensity among the peaks present in a diffraction angle $2\theta$ range of greater than or equal to 25.0° and less than or equal to 29.1° has a half value width of less than 0.89°. The battery 1000 of the present disclosure includes a positive electrode 201, a negative electrode 203, and an electrolyte layer 202 disposed between the positive electrode 201 and the negative electrode 203. At least one selected from the group consisting of the positive electrode 201, the negative electrode 203, and the electrolyte layer 202 contains the solid electrolyte material of the present disclosure.

FIG. 2

**Description**

Technical Field

The present disclosure relates to a solid electrolyte material, a battery using the same, and a method of manufacturing a solid electrolyte material.

Background Art

PTL 1 discloses a solid electrolyte composition including a halide solid electrolyte material and an organic solvent.

Citation List

Patent Literature

PTL 1: International Publication No. WO 2021/131426

Summary of Invention

Technical Problem

It is an object of the present disclosure to provide a solid electrolyte material including iodine, wherein the solid electrolyte material has a structure suitable for improving heat resistance.

Solution to Problem

The solid electrolyte material of the present disclosure is a solid electrolyte material including Li, Y, and I, wherein in an X-ray diffraction pattern of the solid electrolyte material obtained by X-ray diffraction measurement using Cu-K$\alpha$ rays, the peak with the highest intensity among the peaks present in a diffraction angle $2\theta$ range of greater than or equal to 25.0°and less than or equal to 29.1° has a half value width of less than 0.89°.

Advantageous Effects of Invention

The present disclosure provides a solid electrolyte material including iodine, wherein the solid electrolyte material has a structure suitable for improving heat resistance. Brief Description of Drawings
[Fig. 1] Fig. 1 is a flow chart showing an example of a method of manufacturing a solid electrolyte material according to a first embodiment.
[Fig. 2] Fig. 2 is a cross-sectional view of a battery 1000 according to a second embodiment.
[Fig. 3] Fig. 3 is a graph showing X-ray diffraction patterns of solid electrolyte materials of Examples 1 to 3, Comparative Example 1, and Reference Example 1.
[Fig. 4] Fig. 4 is a schematic view of compression molding dies 300 used for evaluating the ion conductivity of a solid electrolyte material.
[Fig. 5] Fig. 5 is a graph showing Cole-Cole plots obtained by impedance measurement of a solid electrolyte material of Example 1.
[Fig. 6] Fig. 6 is a graph showing initial discharge characteristics of a battery of Example 1.
[Fig. 7] Fig. 7 is scanning electron microscope (SEM) images ($\times$ 10,000) of solid electrolyte materials of Examples 1 to 3 and Comparative Example 1.

Description of Embodiments

[Underlying knowledge forming basis of the present disclosure]

As described also in the section of [Background Art], as solid electrolyte materials, halide solid electrolyte materials containing halogen elements have been proposed.
The present inventors have continued to study halide solid electrolyte materials and have newly found a problem that when a solid electrolyte material includes iodine as a halogen element, as the crystallinity of the solid electrolyte material decreases, the heat resistance decreases accordingly. Hence, the present inventors have diligently studied in order to obtain a solid electrolyte material including iodine and having a structure suitable for improving heat resistance and as a result, have arrived at completion of a solid electrolyte material of the following present disclosure.

The solid electrolyte material of the present disclosure is a solid electrolyte material including Li, Y, and I, wherein in an X-ray diffraction pattern of the solid electrolyte material obtained by X-ray diffraction measurement using Cu-K$\alpha$ rays, the peak with the highest intensity among the peaks present in a diffraction angle $2\theta$ range of greater than or equal to 25.0°and less than or equal to 29.1° has a half value width of less than 0.89°.

[Embodiment of the present disclosure]

Embodiments of the present disclosure will now be described with reference to the drawings.

(First embodiment)

The solid electrolyte material according to a first embodiment includes Li, Y, and I. In an X-ray diffraction pattern of the solid electrolyte material according to the first embodiment obtained by X-ray diffraction measurement using Cu-K$\alpha$ rays, the peak with the highest intensity among the peaks present in a diffraction angle $2\theta$ range of greater than or equal to 25.0° and less than or equal to 29.1° has a half value width of less than 0.89°.

The solid electrolyte material according to the first embodiment has improved heat resistance.

The solid electrolyte material according to the first embodiment can be used for obtaining a battery having excellent charge and discharge characteristics. An example of the battery is an all-solid-state battery. The all-solid-state battery may be a primary battery or may be a secondary battery.

The solid electrolyte material according to the first embodiment desirably does not contain sulfur. A solid electrolyte material not containing sulfur does not generate hydrogen sulfide, even if exposed to the atmosphere, and is therefore excellent in safety.

The solid electrolyte material according to the first embodiment may be essentially sulfur-free. The phrase "the solid electrolyte material according to the first embodiment is essentially sulfur-free" means the solid electrolyte material does not contain sulfur as a constituent element, excluding sulfur inevitably mixed as an impurity. In this case, the amount of sulfur mixed as an impurity in the solid electrolyte material is, for example, less than or equal to 1 mol%. From the viewpoint of safety, the solid electrolyte material according to the first embodiment may be sulfur-free. A solid electrolyte material not containing sulfur does not generate hydrogen sulfide, even if exposed to the atmosphere, and is therefore excellent in safety. The sulfide solid electrolyte disclosed in PTL 1 may generate hydrogen sulfide when exposed to the atmosphere.

The solid electrolyte material according to the first embodiment may consist essentially of Li, Y, and I. The phrase "the solid electrolyte material according to the first embodiment consists essentially of Li, Y, and I" means that the molar proportion (i.e., molar fraction) of the sum of the amounts of Li, Y, and I to the sum of the amounts of all elements constituting the solid electrolyte material according to the first embodiment is greater than or equal to 90%. As an example, the molar proportion may be greater than or equal to 95%.

In order to enhance the ion conductivity of the solid electrolyte material, the solid electrolyte material according to the first embodiment may consist of Li, Y, and I only.

The solid electrolyte material according to the first embodiment may contain inevitably mixed elements. Examples of the elements are hydrogen, oxygen, and nitrogen. These elements may be present in the raw material powders of the solid electrolyte material or in the atmosphere for manufacturing or storing the solid electrolyte material. The amount of the elements inevitably mixed in the solid electrolyte material according to the first embodiment is, for example, less than or equal to 1 mol%.

The solid electrolyte material according to the first embodiment may further include at least one selected from the group consisting of F, Cl, and Br.

The solid electrolyte material according to the first embodiment may further include at least one selected from the group consisting of Cl and Br.

The solid electrolyte material according to the first embodiment may further include Cl and Br.

The solid electrolyte material according to the first embodiment may have a composition represented by $Li_{6-3a}Y_aI_{6-b}X_b$. Here, X is at least one selected from the group consisting of F, Cl, and Br, and $0 < a < 2$ and $0 \leq b < 6$ are satisfied.

The solid electrolyte material according to the first embodiment may have a composition represented by $Li_3YBr_2Cl_2I_2$.

The solid electrolyte material according to the first embodiment may further include at least one selected from the group consisting of Mg, Ca, Sr, Ba, Zn, Sn, Al, Sc, Ga, Bi, Sm, Sb, Zr, Hf, Ti, Ta, Nb, W, Gd, and Tb.

The X-ray diffraction pattern of the solid electrolyte material according to the first embodiment can be measured by a θ-2θ method using Cu-Kα rays (wavelength: 1.5405 Å and 1.5444 Å) as an X-ray source.

As described above, in an X-ray diffraction pattern of the solid electrolyte material according to the first embodiment, the peak having the highest intensity among the peaks present in a diffraction angle 2θ range of greater than or equal to 25.0° and less than or equal to 29.1° has a half value width of less than 0.89°. The solid electrolyte material having such a crystal phase has high heat resistance.

The half value width is the distance between positions on either side of a peak at which the intensity value is half of the peak intensity. That is, the half value width is a width represented by the difference between two diffraction angles at which the intensity value $I_{hMAX}$ is half of the maximum intensity $I_{MAX}$ of a peak.

In order to improve the heat resistance of a solid electrolyte material, in an X-ray diffraction pattern of the solid electrolyte material, the half value width of the peak with the highest intensity among the peaks present in a diffraction angle 2θ range of greater than or equal to 25.0°and less than or equal to 29.1° may be greater than or equal to 0.22° and less than 0.89° or greater than or equal to 0.22° and less than or equal to 0.85°.

In order to further improve the heat resistance of the solid electrolyte material, in an X-ray diffraction pattern of the solid electrolyte material, the half value width of the peak with the highest intensity among the peaks present in a diffraction angle 2θ range of greater than or equal to 25.0°and less than or equal to 29.1° may be greater than 0.22° and less than 0.89°, greater than 0.22° and less than or equal to 0.85°, or greater than or equal to 0.25° and less than or equal to 0.85°.

In an X-ray diffraction pattern of the solid electrolyte material according to the first embodiment obtained by X-ray diffraction measurement using Cu-Kα rays, the peak with the highest intensity may be present in a diffraction angle 2θ range of greater than or equal to 25.0° and less than or equal to 29.1°. The half value width of the peak may be greater than or equal to 0.22° and less than 0.89°, greater than or equal to 0.22° and less than or equal to 0.85°, greater than 0.22° and less than 0.89°, greater than 0.22° and less than or equal to 0.85°, or greater than or equal to 0.25° and less than or equal to 0.85°.

The shape of the solid electrolyte material according to the first embodiment is not limited. Examples of the shape are needle, spherical, and oval spherical shapes. The solid electrolyte material according to the first embodiment may be a particle. The solid electrolyte material according to the first embodiment may have a pellet or planar shape.

When the shape of the solid electrolyte material according to the first embodiment is a particulate shape (e.g., spherical), the solid electrolyte material may have an average particle diameter of less than or equal to 100 μm.

The particle diameter of the solid electrolyte material can be measured with an SEM. A particle group is observed through an electron microscope, and the unidirectional particle diameters of specific particles in an electron microscope image are measured. Unidirectional particle diameters of an arbitrary number (e.g., 30) of particles are calculated, and the average thereof is recognized as the average particle diameter of the solid electrolyte particle.

Calculation of the average particle diameter may use a laser diffraction particle size distribution measuring apparatus. In such a case, the average particle diameter may be calculated as a simple average of the particle diameters calculated by the apparatus.

The solid electrolyte material according to the first embodiment may have an average particle diameter of less than or equal to 10 μm, an average particle diameter of less than or equal to 5 μm, an average particle diameter of less than or equal to 2 μm, or an average particle diameter of less than or equal to 1.754 μm. The solid electrolyte material according to the first embodiment may have an average particle diameter of greater than or equal to 0.1 μm, an average particle diameter of greater than or equal to 0.3 μm, an average particle diameter of greater than or equal to 0.4 μm, or an average particle diameter of greater than or equal to 0.415 μm.

The solid electrolyte material according to the first embodiment may have an average particle diameter of less than or equal to 1 μm. According to the above configuration, when the solid electrolyte material is used in the positive or negative electrode plate of a battery, the dispersibility is expected to be improved. The battery with the improved dispersibility in the electrode plate has good charge and discharge characteristics. When the solid electrolyte material is used in the electrolyte layer of a battery, a reduction in the thickness can be expected. The reduction in the thickness of the electrolyte layer that does not contribute to the battery capacity improves the energy density of the battery.

The solid electrolyte material according to the first embodiment may have an average particle diameter of greater than or equal to 0.415 μm and less than or equal to 1.754 μm or greater than or equal to 0.415 μm and less than or equal to 0.592 μm.

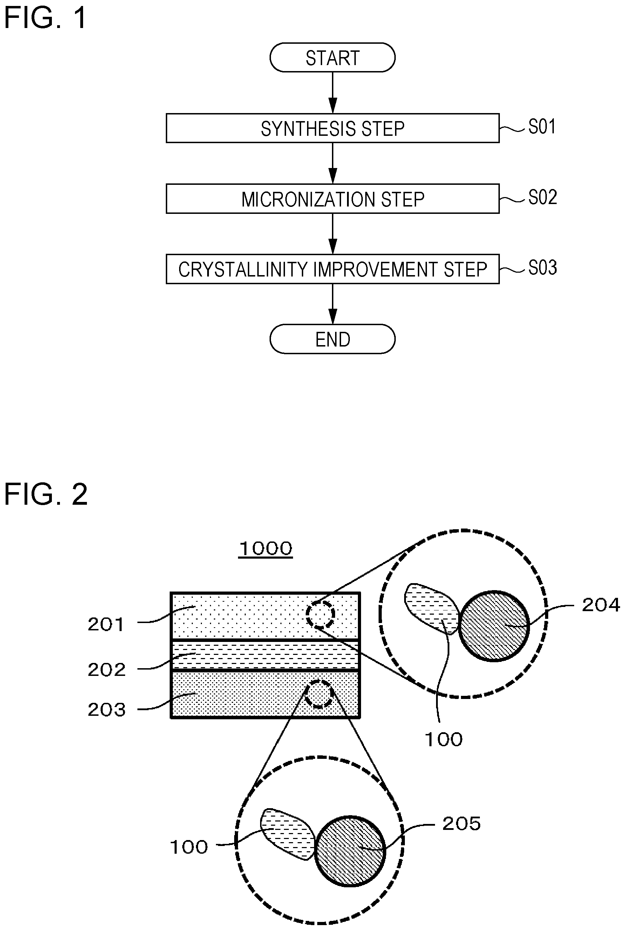

A method of manufacturing the solid electrolyte material according to the first embodiment will now be described with reference to Fig. 1. Fig. 1 is a flow chart showing an example of the method of manufacturing the solid electrolyte material according to the first embodiment.

The method of manufacturing the solid electrolyte material according to the first embodiment may include a synthesis step S01, a micronization step S02, and a crystallinity improvement step S03. The synthesis step S01, the micronization step S02, and the crystallinity improvement step S03 may be carried out in this order.

In the synthesis step S01, first, raw material powders of the solid electrolyte material are mixed.

When a solid electrolyte material consisting of Li, Y, Br, Cl, and I is synthesized, for example, a $YCl_3$ raw material powder, a $YBr_3$ raw material powder, a LiBr raw material powder, and a LiI raw material powder are mixed.

The obtained powder mixture is heat-treated in an inert gas atmosphere in which the oxygen concentration and the moisture concentration are adjusted. The atmosphere is, for example, an argon atmosphere having a dew point of less than or equal to -60°C. The heat-treatment temperature may be, for example, within a range of greater than or equal to 200°C and less than or equal to 650°C.

Subsequently, coarse pulverization with a pulverizer such as a hammermill may be performed, or coarse pulverization with a mortar may be performed when the amount is small. Thus, a solid electrolyte material consisting of Li, Y, Br, Cl, and I is synthesized.

In the micronization step S02, first, an organic solvent and the solid electrolyte material produced in the synthesis step S01 are compounded. The blending ratio of the organic solvent and the solid electrolyte material at the time of compounding may be appropriately selected.

Subsequently, the compounded solution of the organic solvent and the solid electrolyte material and pulverization media are charged into a container, and the container is rotated to pulverize the solid electrolyte material. Examples of the pulverization method are those with a roll mill, a pot mill, a planetary ball mill, and a bead mill. In the bead mill, in a pulverization chamber equipped with a rotor and accommodating pulverization media, the rotor is rotated at high speed, and the compounded solution of the organic solvent and the solid electrolyte material passes therethrough for being pulverized.

Examples of the shape of the pulverization media are spherical and barrel shapes. The particle diameter of the solid electrolyte material after pulverization largely depends on the size of the pulverization media. For example, when the shape of the pulverization media is spherical, the diameter of the pulverization media may be less than or equal to 1.0 mm.

After the pulverization, the solid electrolyte material and the pulverization media are separated from each other. The separation of the solution of the organic solvent and the solid electrolyte material after pulverization and the pulverization media uses, for example, a sieve.

Subsequently, the organic solvent is removed from the solution. For example, the organic solvent may be removed by heating the solution of the organic solvent and the solid electrolyte material after pulverization in an inert gas flowing environment. The inert gas is, for example, nitrogen or argon. The temperature of heating is, for example, greater than or equal to 50°C and less than or equal to 250°C.

The organic solvent may be removed by drying under reduced pressure. The drying under reduced pressure refers to removal of the organic solvent in an atmosphere with a pressure lower than the atmospheric pressure. The atmosphere with a pressure lower than the atmospheric pressure may be, for example, less than or equal to -0.01 MPa as the gauge pressure. In the drying under reduced pressure, the solution of the organic solvent and the solid electrolyte material may be heated to, for example, greater than or equal to 50°C and less than or equal to 250°C. The organic solvent may be removed by vacuum drying. The vacuum drying refers to removal of the organic solvent at a pressure, for example, less than or equal to the vapor pressure at a temperature lower than the boiling point of the organic solvent by 20°C.

In the crystallinity improvement step S03, the crystallinity of the solid electrolyte material is improved. For example, the crystallinity is improved by heating the solid electrolyte material in an argon atmosphere having a dew point of less than or equal to - 60°C. The temperature of the heating may be within a range of, for example, greater than or equal to 150°C and less than or equal to 500°C, and the time of the heating may be, for example, greater than or equal to 5 minutes and less than or equal to 180 minutes.

The heat-treatment temperature in the synthesis step S01 and the heating temperature in the crystallinity improvement step S03 may be different or the same. The heat-treatment temperature in the synthesis step S01 may be higher than the heating temperature in the crystallinity improvement step S03. The heating temperature in the crystallinity improvement step S03 may be higher than the heat-treatment temperature in the synthesis step S01.

Thus, the solid electrolyte material according to the first embodiment is obtained.

The crystallinity of the solid electrolyte material is evaluated by the half value width of the peak with the highest intensity in an X-ray diffraction pattern. The smaller the half value width of the peak with the highest intensity, the higher the crystallinity.

(Second embodiment)

A second embodiment will now be described. The matters described in the first embodiment may be omitted appropriately.

The battery according to the second embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte material according to the first embodiment.

The battery according to the second embodiment contains the solid electrolyte material according to the first embodiment and therefore has excellent charge and discharge characteristics.

The battery according to the second embodiment may be an all-solid-state battery.

Fig. 2 is a cross-sectional view of the battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 contains a positive electrode active material 204 and a solid electrolyte 100.

The negative electrode 203 contains a negative electrode active material 205 and a solid electrolyte 100.

The solid electrolyte 100 includes, for example, the solid electrolyte material according to the first embodiment. The solid electrolyte 100 is, for example, a particle containing the solid electrolyte material according to the first embodiment as a main component. The particle containing the solid electrolyte material according to the first embodiment as a main component means a particle in which the component with the highest molar ratio is the solid electrolyte material according to the first embodiment. The solid electrolyte 100 may be a particle consisting of the solid electrolyte material according to the first embodiment.

The positive electrode 201 contains a material that can occlude and release metal ions (e.g., lithium ions). The material is, for example, the positive electrode active material 204.

Examples of the positive electrode active material 204 are a lithium-containing transition metal oxide, a transition metal fluoride, a polyanion material, a fluorinated polyanion material, a transition metal sulfide, a transition metal oxyfluoride, a transition metal oxysulfide, and a transition metal oxynitride. Examples of the lithium-containing transition metal oxide are $Li(Ni,Co,Al)O_2$, $LiCoO_2$, and $Li(Ni,Co,Mn)O_2$.

In the present disclosure, "(A,B,C)" means "at least one selected from the group consisting of A, B, and C". Here, A, B, and C all represent elements.

The shape of the positive electrode active material 204 is not limited to a specific shape. The positive electrode active material 204 may be a particle. In order to well disperse the positive electrode active material 204 and the solid electrolyte 100 in the positive electrode 201, the positive electrode active material 204 may have a median diameter of greater than or equal to 0.1 $\mu$m. The good dispersion improves the charge and discharge characteristics of the battery 1000. In order to quickly diffuse lithium in the positive electrode active material 204, the positive electrode active material 204 may have a median diameter of less than or equal to 100 $\mu$m. The battery 1000 can operate at a high output due to the quick diffusion of lithium. As described above, the positive electrode active material 204 may have a median diameter of greater than or equal to 0.1 $\mu$m and less than or equal to 100 $\mu$m.

In order to well disperse the positive electrode active material 204 and the solid electrolyte 100 in the positive electrode 201, the positive electrode active material 204 may have a medium diameter greater than that of the solid electrolyte 100.

In order to improve the energy density and output of the battery 1000, in the positive electrode 201, the ratio of the volume of the positive electrode active material 204 to the sum of the volume of the positive electrode active material 204 and the volume of the solid electrolyte 100 may be greater than or equal to 0.30 and less than or equal to 0.95.

In order to improve the energy density and output of the battery 1000, the positive electrode 201 may have a thickness of greater than or equal to 10 $\mu$m and less than or equal to 500 $\mu$m.

The electrolyte layer 202 contains an electrolyte material. The electrolyte material is, for example, a solid electrolyte material. The electrolyte layer 202 may be a solid electrolyte layer.

The solid electrolyte material included in the electrolyte layer 202 may contain the solid electrolyte material according to the first embodiment. The electrolyte layer 202 may contain the solid electrolyte material according to the first embodiment. The electrolyte layer 202 may include greater than or equal to 50 mass% of the solid electrolyte material according to the first embodiment. The electrolyte layer 202 may include greater than or equal to 70 mass% of the solid electrolyte material according to the first embodiment. The electrolyte layer 202 may include greater than or equal to 90 mass% of the solid electrolyte material according to the first embodiment.

The electrolyte layer 202 may consist of the solid electrolyte material according to the first embodiment only.

Hereinafter, the solid electrolyte material according to the first embodiment is referred to as a first solid electrolyte material. The solid electrolyte material different from the first solid electrolyte material is referred to as a second solid electrolyte material.

The electrolyte layer 202 may contain not only the first solid electrolyte material but also a second solid electrolyte material. In the electrolyte layer 202, the first solid electrolyte material and the second solid electrolyte material may be uniformly dispersed. A layer made of the first solid electrolyte material and a layer made of the second solid electrolyte material may be stacked along the stacking direction of the battery 1000.

The electrolyte layer 202 may be composed of the second solid electrolyte material only.

Examples of the second solid electrolyte material are $Li_2MgX_4$, $Li_2FeX_4$, $Li(Al,Ga,In)X_4$, $Li_3(Al,Ga,In)X_6$, and LiX. Here, X is at least one selected from the group consisting of F, Cl, Br, and I.

In order to prevent short circuit between the positive electrode 201 and the negative electrode 203 and enhance the output of the battery 1000, the electrolyte layer 202 may have a thickness of greater than or equal to 1 $\mu$m and less than or equal to 100 $\mu$m.

The negative electrode 203 contains a material that can occlude and release metal ions (e.g., lithium ions). The material is, for example, a negative electrode active material 205.

Examples of the negative electrode active material 205 are a metal material, a carbon material, an oxide, a nitride, a tin compound, and a silicon compound. The metal material may be a single metal or an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of capacity density, suitable examples of the negative electrode active material 205 are silicon (i.e., Si), tin (i.e., Sn), a silicon compound, and a tin compound.

The shape of the negative electrode active material 205 is not limited to a specific shape. The negative electrode active material 205 may be a particle. In order to well disperse the negative electrode active material 205 and the solid electrolyte 100 in the negative electrode 203, the negative electrode active material 205 may have a median diameter of greater than or equal to 0.1 $\mu$m. The good dispersion improves the charge and discharge characteristics of the battery. In order to quickly diffuse lithium in the negative electrode active material 205, the negative electrode active material 205 may have a median diameter of less than or equal to 100 $\mu$m. The battery 1000 can operate at a high output due to the quick diffusion of lithium. As described above, the negative electrode active material 205 may have a median diameter of greater than or equal to 0.1 $\mu$m and less than or equal to 100 $\mu$m.

In order to well disperse the negative electrode active material 205 and the solid electrolyte 100 in the negative electrode 203, the negative electrode active material 205 may have a median diameter greater than that of the solid electrolyte 100.

In order to improve the energy density and output of the battery 1000, in the negative electrode 203, the ratio of the volume of the negative electrode active material 205 to the sum of the volume of the negative electrode active material 205 and the volume of the solid electrolyte 100 may be greater than or equal to 0.30 and less than or equal to 0.95.

In order to improve the energy density and output of the battery 1000, the negative electrode 203 may have a thickness of greater than or equal to 10 $\mu$m and less than or equal to 500 $\mu$m.

In order to enhance the ion conductivity, chemical stability, and electrochemical stability, at least one selected from the group consisting of the positive electrode 201, the electrolyte layer 202, and the negative electrode 203 may contain a second solid electrolyte material. Examples of the second solid electrolyte material are a halide solid electrolyte, a sulfide solid electrolyte, an oxide solid electrolyte, and an organic polymeric solid electrolyte.

In the present disclosure, the term "halide solid electrolyte" means a solid electrolyte containing a halogen element as the main component of anions. The term "sulfide solid electrolyte" means a solid electrolyte containing sulfur as the main component of anions. The term "oxide solid electrolyte" means a solid electrolyte containing oxygen as the main component of anions. The main component of anions means an anion having the largest amount among all the anions constituting the solid electrolyte.

The second solid electrolyte material may be a halide solid electrolyte. The halide solid electrolyte may be $Li_2MgX_4$, $Li_2FeX_4$, $Li(Al,Ga,In)X_4$, $Li_3(Al,Ga,In,Y)X_6$, or LiI as described above.

Other examples of the halide solid electrolyte are compounds represented by $Li_pMe_qY_rZ_6$. Here, $p + m'q + 3r = 6$ and $r > 0$ are satisfied. Me is at least one element selected from the group consisting of metal elements excluding Li and Y and metalloid elements. The value of m' represents the valence of Me. Z is at least one selected from the group consisting of F, Cl, Br, and I. The "metalloid elements" are B, Si, Ge, As, Sb, and Te. The "metal elements" are all elements (excluding hydrogen) included in Groups 1 to 12 of the periodic table and all elements (excluding B, Si, Ge, As, Sb, Te, C, N, P, O, S, and Se) included in Groups 13 to 16 of the periodic table.

In order to enhance the ion conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

The halide solid electrolyte may be $Li_3YCl_6$ or $Li_3YBr_6$.

The second solid electrolyte material may be a sulfide solid electrolyte.

Examples of the sulfide solid electrolyte are $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, and $Li_{10}GeP_2S_{12}$.

The second solid electrolyte material may be an oxide solid electrolyte.

Examples of the oxide solid electrolyte are:

(i) an NASICON-type solid electrolyte, such as $LiTi_2(PO_4)_3$ or its element substitute;
(ii) a perovskite-type solid electrolyte, such as $(LaLi)TiO_3$;
(iii) an LISICON-type solid electrolyte, such as $Li_{14}ZnGe_4O_{16}$, $Li_4SiO_4$, $LiGeO_4$, or its element substitute;
(iv) a garnet-type solid electrolyte, such as $Li_7La_3Zr_2O_{12}$ or its element substitute; and
(v) $Li_3PO_4$ or its N-substitute.

**EP 4 425 510 A1**

The second solid electrolyte material may be an organic polymeric solid electrolyte.

Examples of the organic polymeric solid electrolyte are a polymer compound and a compound of a lithium salt. A polymer compound may have an ethylene oxide structure. The polymer compound having an ethylene oxide structure can contain a large amount of a lithium salt and therefore can further enhance the ion conductivity.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may include a nonaqueous electrolyte solution, a gel electrolyte, or an ionic liquid for the purpose of facilitating the transfer of lithium ions and improving the output characteristics of the battery 1000.

The nonaqueous electrolyte solution contains a nonaqueous solvent and a lithium salt dissolved in the nonaqueous solvent.

Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is $\gamma$-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate.

One nonaqueous solvent selected from these solvents may be used alone. Alternatively, a mixture of two or more nonaqueous solvents selected from these solvents may be used.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

The concentration of the lithium salt may be, for example, in a range of greater than or equal to 0.5 mol/L and less than or equal to 2 mol/L.

As the gel electrolyte, a polymer material impregnated with a nonaqueous electrolyte solution can be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:

(i) an aliphatic chain quaternary salt, such as tetraalkylammonium or tetraalkylphosphonium;
(ii) an alicyclic ammonium, such as a pyrrolidinium, a morpholinium, an imidazolinium, a tetrahydropyrimidinium, a piperazinium, or a piperidinium; and
(iii) a nitrogen-containing heterocyclic aromatic cation, such as a pyridinium or an imidazolium.

Examples of the anion included in the ionic liquid are $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$. The ionic liquid may contain a lithium salt.

At least one selected from the group consisting of the positive electrode 201, the electrolyte layer 202, and the negative electrode 203 may include a binder for the purpose of improving the adhesion between individual particles.

Examples of the binder are polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of such a binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above-mentioned materials may be used as the binder.

At least one selected from the positive electrode 201 and the negative electrode 203 may contain a conductive assistant for enhancing the electron conductivity.

Examples of the conductive assistant are:

(i) graphite, such as natural graphite or artificial graphite;
(ii) carbon black, such as acetylene black or Ketjen black;
(iii) a conductive fiber, such as a carbon fiber or a metal fiber;
(iv) carbon fluoride;

(v) a metal powder, such as aluminum;
(vi) a conductive whisker, such as zinc oxide or potassium titanate;
(vii) a conductive metal oxide, such as titanium oxide; and
(viii) a conductive polymer compound, such as polyanion, polypyrrole, or polythiophene.

In order to reduce the cost, the conductive assistant of the above (i) or (ii) may be used.

Examples of the shape of the battery according to the second embodiment are coin type, cylindrical type, square type, sheet type, button type, flat type, and laminated type.

The battery according to the second embodiment may be manufactured by, for example, providing a material for forming the positive electrode, a material for forming the electrolyte layer, and a material for forming the negative electrode and producing a stack in which the positive electrode, the electrolyte layer, and the negative electrode are disposed in this order by a known method.

EXAMPLES

The present disclosure will now be described in more detail using specific examples.

<Example 1>

(Synthesis step)

$YCl_3$, $YBr_3$, LiBr, and LiI were provided as raw material powders at a molar ratio of $YCl_3$ : $YBr_3$ : LiBr : LiI = 0.67 : 0.33 : 1.00 : 2.00 in an argon atmosphere having a dew point of less than or equal to -60°C (hereinafter, referred to as "dry argon atmosphere"). These materials were pulverized and mixed in a mortar. Subsequently, the mixture was put in an alumina crucible and was heat-treated at 500°C for 1 hour in the dry argon atmosphere and was then pulverized in a mortar. Thus, a solid electrolyte material represented by $Li_3YBr_2Cl_2I_2$ (hereinafter, referred to as "LYBCI") was obtained. A preliminary experiment verified that the measurement value of the composition of the solid electrolyte material obtained in the synthesis step was approximately the same as the charge ratio. Accordingly, the composition of the obtained solid electrolyte material is shown by the charge ratio here.

(Micronization step)

LYBCI (25 g) and heptane (100 g) were charged into a pot for planetary ball mill pulverization, and spherical zirconia pulverization media with a diameter of 0.5 mm (150 g) were charged into the pot, followed by pulverization using a planetary ball mill (manufactured by Fritsch GmbH, PULVERISETTE 5) at 300 rpm for 60 minutes. Subsequently, the pulverization media and the solution composed of LYBCI and heptane were separated using a sieve with an aperture of 212 $\mu$m, The solution was heated to 75°C under a nitrogen flow to remove heptane. Thus, micronized LYBCI was obtained.

(Crystallinity improvement step)

The micronized LYBCI was heated at 250°C for 1 hour in the dry argon atmosphere.

As above, a solid electrolyte material of Example 1 was obtained.

(X-ray diffraction measurement)

The X-ray diffraction pattern of the solid electrolyte material of Example 1 was measured with an X-ray diffractometer (manufactured by RIGAKU Corporation, MiniFlex 600) in a dry environment having a dew point of less than or equal to -45°C. As the X-ray source, Cu-K$\alpha$ rays (wavelength: 1.5405 Å and 1.5444 Å) was used.

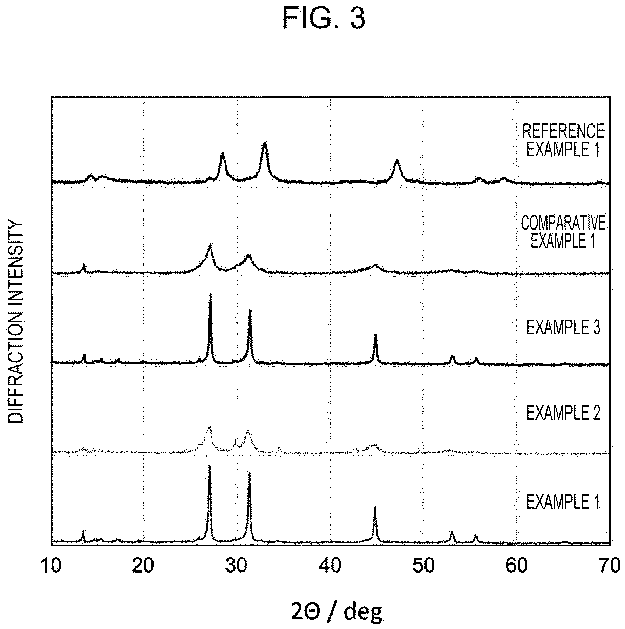

As a result of X-ray diffraction measurement, the peak having the highest intensity was present at 27.0°. The half value width of the peak was 0.25°. That is, in an X-ray diffraction pattern of the solid electrolyte material of Example 1, the peak having the highest intensity among the peaks present in a diffraction angle 2θ range of greater than or equal to 25.0° and less than or equal to 29.1° had a half value width of 0.25°. Fig. 3 is a graph showing an X-ray diffraction pattern of the solid electrolyte material of Example 1.

(Evaluation of ion conductivity)

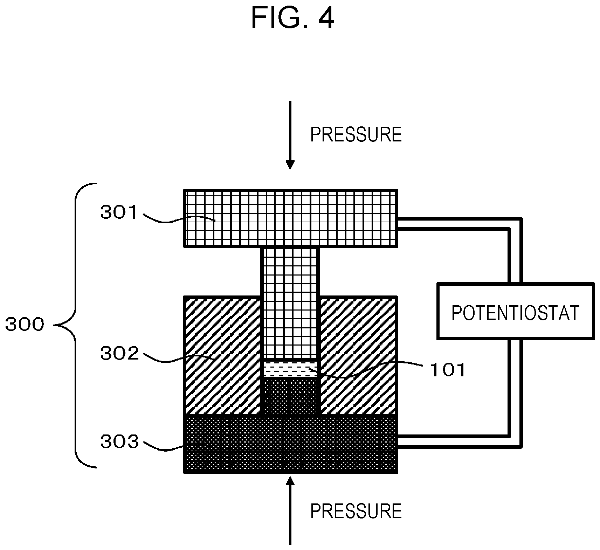

Fig. 4 is a schematic view of compression molding dies 300 used for evaluating the ion conductivity of a solid electrolyte material.

The compression molding dies 300 included a punch upper part 301, a die 302, and a punch lower part 303. The die 302 was made of insulating polycarbonate. The punch upper part 301 and the punch lower part 303 were made of electron-conductive stainless steel.

The ion conductivity of the solid electrolyte material of Example 1 was measured using the compression molding dies 300 shown in Fig. 4 by the following method.

The inside of the compression molding dies 300 was filled with the powder 101 of the solid electrolyte material of Example 1 in the dry argon atmosphere. A pressure of 300 MPa was applied to the solid electrolyte material of Example 1 in the inside of the compression molding dies 300 using the punch upper part 301 and the punch lower part 303.

While applying the pressure, the impedance of the solid electrolyte material of Example 1 was measured at room temperature by an electrochemical impedance measurement method using a potentiostat (manufactured by Princeton Applied Research, VersaSTAT4) through the punch upper part 301 and the punch lower part 303. The punch upper part 301 was connected to the working electrode and the potential measurement terminal. The punch lower part 303 was connected to the counter electrode and the reference electrode.

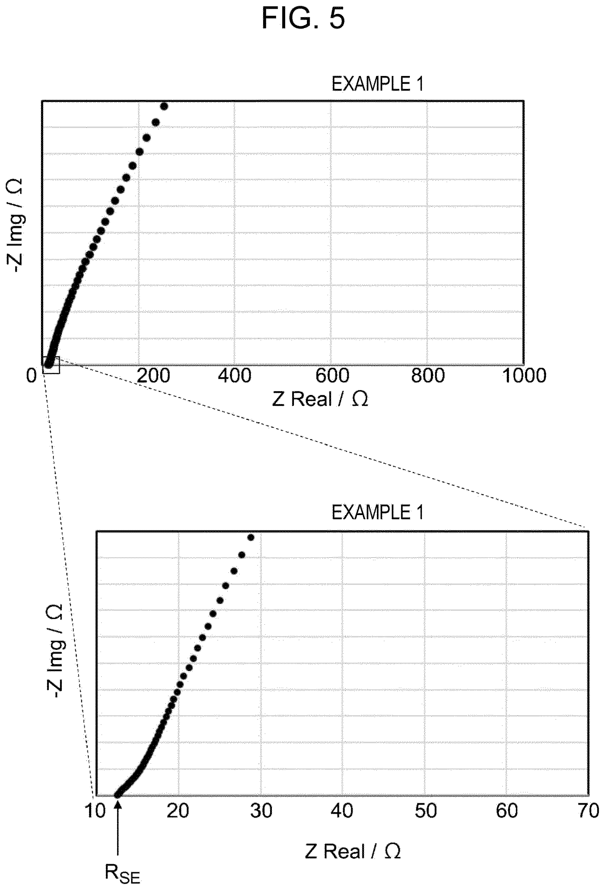

Fig. 5 is a graph showing Cole-Cole plots obtained by impedance measurement of the solid electrolyte material of Example 1.

In Fig. 5, the real value of impedance at the measurement point where the absolute value of the phase of the complex impedance was the smallest was regarded as the resistance value of the solid electrolyte material to ion conduction. The real value is shown by the arrow $R_{SE}$ in Fig. 5. The ion conductivity was calculated using this resistance value based on the following mathematical expression (1):

$$\sigma = (R_{SE} \times S/t)^{-1} \quad (1).$$

Here, $\sigma$ is ion conductivity; S is the contact area of a solid electrolyte material with the punch upper part 301 (equal to the cross-sectional area of the hollow part of the die 302 in Fig. 4); $R_{SE}$ is the resistance value of the solid electrolyte material in impedance measurement; and t is the thickness of the solid electrolyte material applied with the pressure (i.e., in Fig. 4, equal to the thickness of the layer formed from the powder 101 of the solid electrolyte material).

The ion conductivity of the solid electrolyte material of Example 1 measured at 25°C was $4.01 \times 10^{-3}$ S/cm.

(Heat resistance test)

The solid electrolyte material of Example 1 was left to stand in an environment of 120°C for 2 hours in the dry argon atmosphere, and the ion conductivity was then measured. The ion conductivity after heating to the ion conductivity before heating was defined as the ion conductivity maintenance rate. The ion conductivity of the solid electrolyte material of Example 1 after heating was $3.51 \times 10^{-3}$ S/cm. Accordingly, the ion conductivity maintenance rate of the solid electrolyte material of Example 1 was 88%.

(Measurement of average particle diameter)

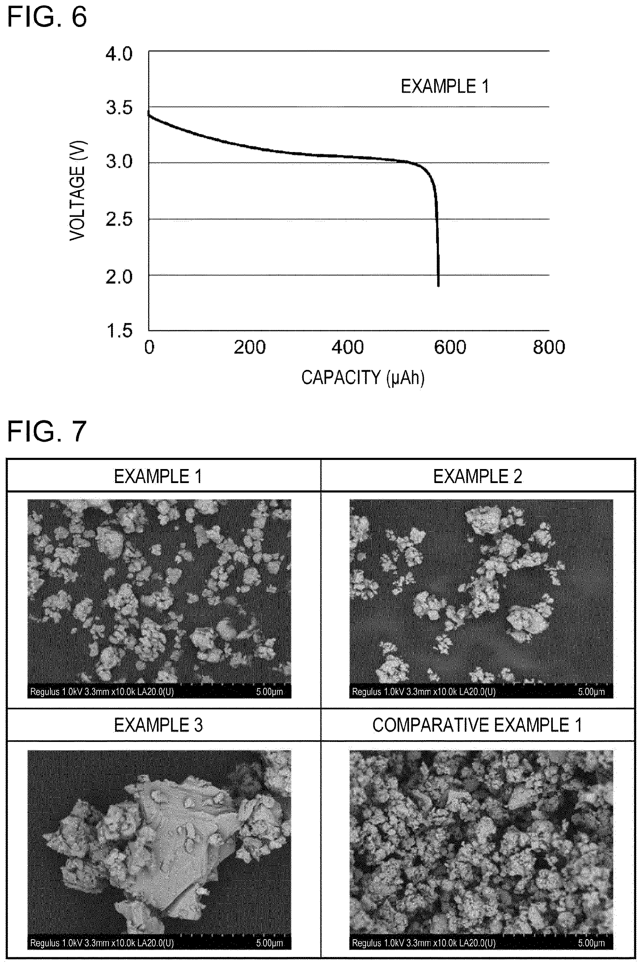

The solid electrolyte material of Example 1 after the heat resistance test was observed with an SEM. The lengths of randomly selected 30 primary particles were measured in a unidirectional particle diameter, and the simple average thereof was defined as the average particle diameter. As the SEM, Regulus 8230 manufactured by Hitachi High-Tech Corporation was used. The observation magnification was 10,000 times. Fig. 7 is an SEM image ($\times$ 10,000) of the solid electrolyte material of Example 1.

The average particle diameter of the solid electrolyte material of Example 1 was 0.592 $\mu$m.

(Production of battery)

The solid electrolyte material of Example 1 and $LiCoO_2$ as an active material were provided at a volume ratio of 70 : 30 in the dry argon atmosphere. These materials were mixed in an agate mortar to obtain a positive electrode mixture.

The solid electrolyte material of Example 1 (100 mg), the above-described positive electrode mixture (10.0 mg), and an aluminum powder (14.7 mg) were stacked in this order in an insulating tube with an inner diameter of 9.5 mm. A pressure of 300 MPa was applied to this stack to form a positive electrode and a solid electrolyte layer. The solid electrolyte layer had a thickness of 480 $\mu$m.

Subsequently, metal In foil was stacked on the solid electrolyte layer. The solid electrolyte layer was disposed between the metal In foil and the positive electrode. The metal In foil had a thickness of 200 $\mu$m. Subsequently, a

pressure of 80 MPa was applied to the metal In foil to form a negative electrode.

A current collector made of stainless steel was attached to the positive electrode and the negative electrode, and a current collecting lead was then attached to the current collector. Finally, the inside of the insulating tube was isolated from the outside atmosphere using an insulating ferrule to seal the inside of the tube.

Thus, a battery of Example 1 was obtained.

(Charge and discharge test)

Fig. 6 is a graph showing the initial discharge characteristics of the battery of Example 1. The initial discharge characteristics were measured by the following method.

The battery of Example 1 was placed in a thermostatic chamber of 25°C. The battery of Example 1 was charged at a current density of 86 $\mu$A/cm$^2$ until the voltage reached 3.5 V. The current density corresponds to 0.05 C rate. Subsequently, the battery of Example 1 was discharged at a current density of 86 $\mu$A/cm$^2$ until the voltage reached 1.9 V.

As a result of the charge and discharge test, the battery of Example 1 had an initial discharge capacity of 578 $\mu$Ah.

<Examples 2 and 3>

In Example 2, the heating temperature in the crystallinity improvement step was set to 200°C.

In Example 3, the heating temperature in the crystallinity improvement step was set to 350°C.

The solid electrolyte materials of Examples 2 and 3 were obtained as in Example 1 except for the above matters.

X-ray diffraction measurement was performed as in Example 1 using the solid electrolyte materials of Examples 2 and 3. Fig. 3 is a graph showing X-ray diffraction patterns of the solid electrolyte materials of Examples 2 and 3.

In Example 2, the peak having the highest intensity was present at 27.1°. The half value width of the peak was 0.85°. That is, in an X-ray diffraction pattern of the solid electrolyte material of Example 2, the peak having the highest intensity among the peaks present in a diffraction angle $2\theta$ range of greater than or equal to 25.0° and less than or equal to 29.1° had a half value width of 0.85°.

In Example 3, the peak having the highest intensity was present at 27.1°. The half value width of the peak was 0.22°. That is, in an X-ray diffraction pattern of the solid electrolyte material of Example 3, the peak having the highest intensity among the peaks present in a diffraction angle $2\theta$ range of greater than or equal to 25.0° and less than or equal to 29.1° had a half value width of 0.22°.

Evaluation of the ion conductivity and heat resistance test were performed as in Example 1 using the solid electrolyte materials of Examples 2 and 3.

In Example 2, the ion conductivity before heating was $2.04 \times 10^{-3}$ S/cm. The ion conductivity after heating was $1.87 \times 10^{-3}$ S/cm. The ion conductivity maintenance rate of the solid electrolyte material of Example 2 was 92%.

In Example 3, the ion conductivity before heating was $7.96 \times 10^{-3}$ S/cm. The ion conductivity after heating was $7.15 \times 10^{-3}$ S/cm. The ion conductivity maintenance rate of the solid electrolyte material of Example 3 was 90%.

The average particle diameters of the solid electrolyte materials of Examples 2 and 3 after heating were measured as in Example 1. Fig. 7 is SEM images ($\times$ 10,000) of the solid electrolyte materials of Examples 2 and 3.

The average particle diameter of the solid electrolyte material of Example 2 was 0.415 $\mu$m.

The average particle diameter of the solid electrolyte material of Example 3 was 1.754 $\mu$m.

Batteries of Examples 2 and 3 were obtained using the solid electrolyte materials of Examples 2 and 3 as in Example 1.

A charge and discharge test was carried out using the batteries of Examples 2 and 3 as in Example 1.

The batteries of Examples 2 and 3 were well charged and discharged as in the battery of Example 1.

<Comparative Example 1>

In Comparative Example 1, the crystallinity improvement step was not performed. Except for this, a solid electrolyte material of Comparative Example 1 was obtained as in Example 1.

X-ray diffraction measurement was performed as in Example 1 using the solid electrolyte material of Comparative Example 1. Fig. 3 is a graph showing the X-ray diffraction pattern of the solid electrolyte material of Comparative Example 1. In Comparative Example 1, the peak having the highest intensity was present at 27.1°. The half value width of the peak was 0.89°. That is, in an X-ray diffraction pattern of the solid electrolyte material of Comparative Example 1, the peak having the highest intensity among the peaks present in a diffraction angle $2\theta$ range of greater than or equal to 25.0° and less than or equal to 29.1° had a half value width of 0.89°.

Evaluation of the ion conductivity and heat resistance test were performed as in Example 1 using the solid electrolyte material of Comparative Example 1. As a result, the ion conductivity before heating was $2.01 \times 10^{-3}$ S/cm. The ion conductivity after heating was $1.14 \times 10^{-3}$ S/cm. The ion conductivity maintenance rate of the solid electrolyte material of Comparative Example 1 was 57%.

The average particle diameter of the solid electrolyte material of Comparative Example 1 was measured as in Example 1. As a result, the average particle diameter of the solid electrolyte material of Example 1 was 0.443 $\mu$m. Fig. 7 is an SEM image ($\times$ 10,000) of the solid electrolyte material of Comparative Example 1.

<Reference Example 1>

(Synthesis step)

$YCl_3$ and LiBr were provided as raw material powders at a molar ratio of $YCl_3$ : LiBr = 0.33 : 1.00 in the dry argon atmosphere. These materials were pulverized and mixed in a mortar. Subsequently, the mixture was placed in an alumina crucible in the dry argon atmosphere and was heat-treated at 500°C for 1 hour and was then pulverized in a mortar. Thus, a solid electrolyte material represented by $Li_3YBr_3Cl_3$ (hereinafter, referred to as "LYBC") was obtained.

(Micronization step)

LYBC (25 g) and heptane (100 g) were charged into a pot for planetary ball mill pulverization, and spherical zirconia pulverization media with a diameter of 0.5 mm (150 g) were charged into the pot, followed by pulverization using a planetary ball mill (manufactured by Fritsch GmbH, PULVERISETTE 5) at 300 rpm for 240 minutes. Subsequently, the pulverization media and the solution composed of LYBC and heptane were separated using a sieve with an aperture of 212 $\mu$m, The solution was heated to 75°C under a nitrogen flow to remove heptane. Thus, micronized LYBC was obtained.

In Reference Example 1, the crystallinity improvement step was not performed.

As above, a solid electrolyte material of Reference Example 1 was obtained.

X-ray diffraction measurement was performed as in Example 1 using the solid electrolyte material of Reference Example 1. Fig. 3 is a graph showing the X-ray diffraction pattern of the solid electrolyte material of Reference Example 1. In Reference Example 1, the peak having the highest intensity was present at 32.9°. The half value width of the peak was 0.91°.

Evaluation of the ion conductivity and heat resistance test were performed as in Example 1 using the solid electrolyte material of Reference Example 1. As a result, the ion conductivity before heating was $1.08 \times 10^{-3}$ S/cm. The ion conductivity after heating was $1.15 \times 10^{-3}$ S/cm. The ion conductivity maintenance rate of the solid electrolyte material of Reference Example 1 was 106%.

[Table 1]

|  | Half value width (°) | Ion conductivity before heating (m S/cm) | Ion conductivity after heating (mS/cm) | Ion conductivity maintenance rate (%) | Average particle diameter ($\mu$m) |
|---|---|---|---|---|---|
| Example 1 | 0.25 | 4.01 | 3.51 | 88 | 0.592 |
| Example 2 | 0.85 | 2.04 | 1.87 | 92 | 0.415 |
| Example 3 | 0.22 | 7.96 | 7.15 | 90 | 1.754 |
| Comparative Example 1 | 0.89 | 2.01 | 1.14 | 57 | 0.443 |
| Reference Example 1 | 0.91 | 1.08 | 1.15 | 106 | - |

<Consideration>

The half value widths shown in Table 1 are half value widths of peaks having the highest intensity in the respective X-ray diffraction patterns in Examples 1 to 3, Comparative Example 1, and Reference Example 1. In the X-ray diffraction patterns of the solid electrolyte materials of Examples 1 to 3 and Comparative Example 1, the peaks having the highest intensity were present in a diffraction angle $2\theta$ range of greater than or equal to 25.0° and less than or equal to 29.1°. That is, in the X-ray diffraction patterns of the solid electrolyte materials of Examples 1 to 3 and Comparative Example 1, the half value widths shown in Table 1 are half value widths of peaks having the highest intensity among the peaks present in diffraction angle $2\theta$ range of greater than or equal to 25.0° and less than or equal to 29.1°.

The peak having the highest intensity in the X-ray diffraction pattern of the solid electrolyte material of Comparative Example 1 has a half value width greater than those of the peaks having the highest intensity in the X-ray diffraction patterns of the solid electrolyte materials of Examples 1 to 3. That is, the solid electrolyte material of Comparative Example 1 has lower crystallinity. It is demonstrated that when the crystallinity of a solid electrolyte material is low as in Comparative Example 1, the ion conductivity maintenance rate is low, that is, the heat resistance is low. The solid electrolyte materials of Examples 1 to 3 have heat resistance higher than that of the solid electrolyte material of Comparative Example 1.

In the crystallinity improvement step, the micronized solid electrolyte material was heated. As obvious from the results of Examples 1 to 3, the crystallinity is improved with an increase of temperature in heating. As the same time, as shown in Example 3, it was confirmed that heating at 350°C causes sticking individual particles of the solid electrolyte material, and the particle diameter tends to increase.

As shown in Reference Example 1, it can be confirmed that in a solid electrolyte material not including iodine, the heat resistance does not decrease even if the crystallinity decreases. Accordingly, it can be said that the problem that heat resistance decreases as crystallinity decreases is peculiar to a solid electrolyte material including iodine as a halogen element.

When the solid electrolyte material further includes Mg, Ca, Sr, Ba, Zn, Sn, Al, Sc, Ga, Bi, Sm, Sb, Zr, Hf, Ti, Ta, Nb, W, Gd, or Tb, the position of the peak having the highest intensity in an X-ray diffraction pattern can move about ±2°at most.

Industrial Applicability

The solid electrolyte material of the present disclosure is used in, for example, an all-solid-state lithium ion secondary battery.

Reference Signs List

100 solid electrolyte
101 powder of solid electrolyte material
201 positive electrode
202 electrolyte layer
203 negative electrode
204 positive electrode active material
205 negative electrode active material
300 compression molding dies
301 punch upper part
302 die
303 punch lower part
1000 battery

**Claims**

1. A solid electrolyte material comprising Li, Y, and I, wherein
in an X-ray diffraction pattern of the solid electrolyte material obtained by X-ray diffraction measurement using Cu-K$\alpha$ rays, a peak having highest intensity among peaks present in a diffraction angle 2$\theta$ range of greater than or equal to 25.0° and less than or equal to 29.1° has a half value width of less than 0.89°.

2. The solid electrolyte material according to claim 1, further comprising:
at least one selected from the group consisting of F, Cl, and Br.

3. The solid electrolyte material according to claim 1, further comprising Cl and Br.

4. The solid electrolyte material according to claim 3, represented by $Li_3YBr_2Cl_2I_2$.

5. The solid electrolyte material according to any one of claims 1 to 3, further comprising:
at least one selected from the group consisting of Mg, Ca, Sr, Ba, Zn, Sn, Al, Sc, Ga, Bi, Sm, Sb, Zr, Hf, Ti, Ta, Nb, W, Gd, and Tb.

6. The solid electrolyte material according to any one of claims 1 to 5, having an average particle diameter of greater than or equal to 0.415 μm and less than or equal to 1.754 μm.

7. The solid electrolyte material according to any one of claims 1 to 6, having an average particle diameter of less than or equal to 1 μm.

8. The solid electrolyte material according to claims 1 to 7, wherein
the peak has a half value width of greater than or equal to 0.22° and less than 0.89°.

9. A battery comprising:

a positive electrode;
a negative electrode; and
an electrolyte layer disposed between the positive electrode and the negative electrode, wherein
at least one selected from the group consisting of the positive electrode, the negative electrode, and the electrolyte layer contains the solid electrolyte material according to any one of claims 1 to 8.

10. The battery according to claim 9, wherein

the negative electrode contains the solid electrolyte material according to any one of claims 1 to 8, and
the positive electrode and the electrolyte layer contain a halide solid electrolyte.

11. A method of manufacturing a solid electrolyte material, comprising:

a pulverization step of pulverizing a solid electrolyte material including iodine; and
a heating step of heating the pulverized solid electrolyte material at greater than or equal to 150°C and less than or equal to 500°C.

12. The method of manufacturing a solid electrolyte material according to claim 11, wherein
the pulverization step includes:

charging a solid electrolyte material including iodine, an organic solvent, and pulverization media into a container;
pulverizing the charged solid electrolyte material by rotating the container;
separating the pulverization media; and
removing the organic solvent, and
in the heating step, heating is performed in an inert gas environment.

13. The method of manufacturing a solid electrolyte material according to claim 11 or 12, wherein
the heating temperature in the heating step is greater than or equal to 200°C and less than or equal to 350°C.

# FIG. 1

```
        ( START )
            │
            ▼
┌───────────────────────────┐
│      SYNTHESIS STEP       │──S01
└───────────────────────────┘
            │
            ▼
┌───────────────────────────┐
│     MICRONIZATION STEP    │──S02
└───────────────────────────┘
            │
            ▼
┌───────────────────────────┐
│ CRYSTALLINITY IMPROVEMENT STEP │──S03
└───────────────────────────┘
            │
            ▼
         ( END )
```

# FIG. 2

1000

201
202
203

204
100
205
100

# FIG. 3

# FIG. 4

PRESSURE

301

300

302

101

303

POTENTIOSTAT

PRESSURE

# FIG. 5

EXAMPLE 1

EXAMPLE 1

# FIG. 6

# FIG. 7

## INTERNATIONAL SEARCH REPORT

| International application No. |
|---|
| **PCT/JP2022/029804** |

**A. CLASSIFICATION OF SUBJECT MATTER**

*H01B 1/06*(2006.01)i; *C01F 17/36*(2020.01)i; *H01M 4/13*(2010.01)i; *H01M 4/62*(2006.01)i; *H01M 10/052*(2010.01)i; *H01M 10/0562*(2010.01)i

FI: H01B1/06 A; H01M10/0562; H01M10/052; H01M4/62 Z; H01M4/13; C01F17/36

According to International Patent Classification (IPC) or to both national classification and IPC

**B. FIELDS SEARCHED**

Minimum documentation searched (classification system followed by classification symbols)

H01B1/06; C01F17/36; H01M4/13; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/136952 A1 (PANASONIC IP MAN CO LTD) 02 July 2020 (2020-07-02) paragraphs [0027], [0029], [0055], [0068]-[0069] | 1-11, 13 |
| X | WO 2020/137154 A1 (PANASONIC IP MAN CO LTD) 02 July 2020 (2020-07-02) paragraphs [0077], [0110] | 11-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 October 2022** | **18 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/029804**

| Patent document cited in search report | | | Publication date (day/month/year) | Patent family member(s) | | | Publication date (day/month/year) |
|---|---|---|---|---|---|---|---|
| WO | 2020/136952 | A1 | 02 July 2020 | US 2021/0269320 A1 paragraphs [0035], [0037], [0071], [0094]-[0095] | | | |
| WO | 2020/137154 | A1 | 02 July 2020 | US 2021/0328261 A1 paragraphs [0109], [0143] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021131426 A